# EUROPÄISCHE PATENTSCHRIFT

(11) **EP 3 186 457 B1**
(45) Veröffentlichungstag und Bekanntmachung des Hinweises auf die Patenterteilung: **26.02.2020**
(21) Anmeldenummer: 15775079.5
(22) Anmeldetag: 25.08.2015
(51) Int. Cl.: E04C 2/54, E04C 2/52

(54) **GEBÄUDEHÜLLENFLÄCHENELEMENT, VERBUNDFENSTER UND GEBÄUDEFASSADENSYSTEM**
BUILDING ENVELOPE SURFACE ELEMENT, COMPOSITE WINDOW, AND BUILDING FAÇADE SYSTEM
ÉLÉMENT DE SURFACE D'ENVELOPPE DE BÂTIMENT, FENÊTRE COMPOSITE ET SYSTÈME DE FAÇADE DE BÂTIMENT

(30) Priorität: 29.08.2014 DE 102014012559
(43) Veröffentlichungstag der Anmeldung: 05.07.2017
(73) Patentinhaber: EurA AG, 73479 Ellwangen (DE); Friedrich-Schiller-Universität Jena, 07743 Jena (DE)
(72) Erfinder: SCHMIDT, Dirk, 98529 Suhl (DE); WONDRACZEK, Lothar, 07743 Jena (DE)
(74) Vertreter: Weihrauch, Frank
(86) Internationale Anmeldenummer: PCT/DE2015/000421
(87) Internationale Veröffentlichungsnummer: WO 2016/029897

(56) Entgegenhaltungen:
- DE-A1- 1 960 745
- DE-A1- 2 608 302
- DE-A1- 2 636 533
- DE-A1- 2 914 996
- DE-A1- 3 008 610
- DE-A1- 10 157 843
- DE-A1- 10 351 023
- DE-A1- 19 606 293
- DE-A1-102008 045 324
- DE-A1-102008 064 010
- DE-U1- 7 926 339
- DE-U1- 29 918 781
- US-A- 4 141 341
- US-A- 4 320 743

## Beschreibung

Gebäudehüllenflächenelement, Verbundfenster und Gebäudefassadensystem Die Erfindung betrifft ein Gebäudehüllenflächenelement zum Einsatz im Bereich einer Gebäudeaußenwand, sowie eine Verbundfenster und ein Gebäudefassadensystem mit einem solchen Gebäudehüllenflächenelement.

Aus dem Stand der Technik ist es bekannt, zur Verbesserung der Energieeffizienz bei Gebäuden Mittel vorzusehen, welche insbesondere bei niedrigen Außentemperaturen einem unerwünschten Wärmeverlust oder bei hohen Außentemperaturen einem unerwünschten Aufheizen des Gebäudes entgegenwirken sollen.

Zum bekannten Stand der Technik gehören solare Heizungsunterstützungen mittels Wärmekollektoren, siehe z.B. DE 10 2008 045 324 A1. Nachteilig ist das Erfordernis zusätzlicher Vorrichtungen mit entsprechendem zusätzlichen Platzbedarf sowie dass damit keine Lösung aufgezeigt wird, wie einem unerwünschten Aufheizen des Gebäudes entgegengewirkt werden kann.

Ferner werden beispielsweise Verbund- oder Isolierglasfenster mit zwei oder drei voneinander beabstandeten Fensterscheiben oder entsprechend zusätzliche Abschlussmittel, insbesondere Rolläden, sowie integrierte Verschattungen durch Lamellen oder Folien verwendet.

Zudem ist es aus dem Stand der Technik bekannt, einzelne Abschnitte einer Gebäudeaußenwand mit entsprechenden, mechanisch verstellbaren Fassadenelementen zu versehen, welche je nach gewünschter Gebäudeinnentemperatur eine Sonneneinstrahlung verhindern oder zulassen. Der Nachteil derartiger Lösungen besteht jedoch darin, dass diese lediglich die Licht- und Sonneneinstrahlung in das Gebäudeinnere verändern können, eine gesteuerte Nutzung, insbesondere der solarthermischen Energie, kann durch derartige Systeme nicht unmittelbar bereitgestellt werden.

Eine weitere Lösung zur Verbesserung der Energieeffizienz eines Gebäudes wird mit sogenannten adaptiven Fassadenelementen vorgeschlagen, welche aktiv auf sich verändernde Umwelteinflüsse oder Nutzeranforderungen reagieren können. Derartige Fassadenelemente sind beispielsweise als Photobioreaktoren ausgebildet. Es handelt sich um Wasserbehältnisse, die durch einen Scheibenzwischenraum gebildet werden, in denen Mikroalgen kultiviert werden, welche mittels Photosynthese Biomasse produzieren.
Je nach Menge der produzierten Biomasse können durch diese zum einen Sicht- und Sonnenschutzfunktionen übernommen und zum anderen das nicht benötigte Licht absorbiert und zur Wärmegewinnung genutzt werden.
Die Nachteile derartiger Photobioreaktoren im Zusammenhang mit einer Nutzung als Fassadenelement bestehen insbesondere in dem erhöhten technischen Aufwand für deren Bereitstellung und deren Unterhalt, in den optischen Eigenschaften sowie in den Problemen der Anpassung an das jeweilige solare Dargebot in Abhängigkeit von den Gebäudenutzungsvorgaben.

Aus der Druckschrift DE 196 06 293 A1 ist zudem ein solarthermischer Kollektor bekannt, dessen Gehäuse aus zwei miteinander dicht verbundenen Kunststoffplatten besteht, welche zumindest eine zwischenliegende Hohlkammer für den Durchfluss eines Wärmetransportmediums wie insbesondere Wasser ausbilden. Der beschriebene Kollektor ist anstelle von Dachziegeln in einen Dachaufbau integrierbar sowie als Funktionsbauteil an Außenfassaden von Gebäuden einsetzbar.

Ausgehend von dem Stand der Technik besteht die Aufgabe der Erfindung darin, eine technische Lösung bereitzustellen, welche die Energieeffizienz eines Gebäudes verbessert, vorteilhafte optische Eigenschaften aufweist und mit geringem technischen Aufwand und kostengünstig herstellbar, montierbar und betreibbar ist.

Die Aufgabe wird in Bezug auf durch ein Gebäudehüllenflächenelement mit den in Patentanspruch 1 aufgeführten Merkmalen gelöst. Bevorzugte Weiterbildungen ergeben sich aus den Unteransprüchen. Ferner wird die Aufgabe durch ein Verbundfenster mit den in Patentanspruch 5 aufgeführten Merkmalen sowie durch ein Gebäudefassadensystem mit den in Patentanspruch 6 aufgeführten Merkmalen gelöst.

Ein erfindungsgemäßes Gebäudehüllenflächenelement weist ein erstes und ein zweites Glaselement auf, wobei die Glaselemente flächig miteinander verbunden sind. Es handelt sich um flächige Glaselemente, die als ebene oder gewölbte Glaselemente vorliegen können.

Mindestens ein Glaselement weist darüber hinaus eine Mehrzahl längserstreckender Vertiefungen auf.

Die Vertiefungen werden in diesem Zusammenhang beispielsweise durch Walzen, Prägen oder andere formgebende Verfahren in das jeweilige Glaselement eingebracht.

Die flächige Verbindung der Glaselemente erfolgt erfindungsgemäß derart, dass die Vertiefungen des einen Glaselements durch das andere Glaselement dichtend abgedeckt werden.

Hierzu werden die Glaselemente beispielsweise durch physikalische, chemische oder thermische Vernetzung ihrer Oberflächen oder durch ein entsprechendes Verbindungsmittel, zum Beispiel einen Kleber oder eine zu laminierende Folie, miteinander verbunden.

Ferner weist das Gebäudehüllenflächenelement zwei Anschlusselemente auf. Diese sind jeweils an den sich gegenüberliegenden Stirnseiten der verbundenen Glaselemente angeordnet und dichtend mit diesen verbunden. Die Anschlusselemente bilden vorzugsweise im Zusammenwirken mit den Stirnseiten der verbundenen Glaselemente jeweils einen Hohlraum aus, der bei dem ersten Anschlusselement, welcher an der ersten Stirnseite angeordnet ist, als erster Sammelkanal und bei dem zweiten Anschlusselement, welches an der zweiten Stirnseite angeordnet ist, als zweiter Sammelkanal bezeichnet wird.

Die längserstreckenden Vertiefungen bilden in dem Gebäudehüllenflächenelement durch die Überdeckung erfindungsgemäß Kapillarkanäle aus, welche von der ersten Stirnseite zu der zweiten Stirnseite der verbundenen Glaselemente führen und dort jeweils enden.
Das erste und zweite Abschlusselement sind dabei so angeordnet, dass der erste und der zweite Sammelkanal ferner mit den Kapillarkanälen an deren gegenüberliegenden Enden verbunden sind, sodass alle Kanäle miteinander verbundene Hohlräume in der Art eines Röhrensystems bilden. Die Kapillarkanäle und die Sammelkanäle werden nachfolgend auch zusammengefasst als Kanäle bezeichnet.

Die Kanäle, insbesondere die Kapillarkanäle, können je nach Anwendungsfall und gewünschter Effizienz des Gebäudehüllenflächenelements unterschiedlich, beispielsweise parallel, harfenförmig oder meanderförmig angeordnet sein und zudem unterschiedliche Querschnitte, beispielsweise halbrund, rund oder eckig, aufweisen.

Die Kapillarkanalquerschnitte weisen bevorzugt Maße von 0,5 Millimeter x 1 Millimeter bis 5 Millimeter x 10 Millimeter auf. Besonders bevorzugt weisen die Kapillaren Querschnitte von 4 bis 22 Quadratmillimeter auf.

Die Kanäle sind erfindungsgemäß von einem Fluid durchströmbar. Bei dem Fluid handelt es sich um ein flüssiges Wärmeträgermedium, welches je nach Anwendungsfall des Gebäudehüllenflächenelements unterschiedliche spezifische Wärmekapazitäten und Viskositäten aufweisen kann.

Das Ein- und Ausbringen des Fluids in, beziehungsweise aus dem Gebäudehüllenflächenelement, erfolgt erfindungsgemäß mittels Fluidanschlüssen, wobei dem ersten Sammelkanal ein erster Fluidanschluss und dem zweiten Sammelkanal ein zweiter Fluidanschluss zugeordnet sind. Darüber hinaus können jedem der Sammelkanäle weitere Fluidanschlüsse zugeordnet sein.

Das erfindungsgemäße Gebäudehüllenflächenelement ist als besonderer Vorteil dazu in der Lage, Umgebungswärme durch Wärmeleitung sowie solare Wärmestrahlung aufzunehmen und diese an das durch die Kanäle strömende Fluid zu übertragen. Über das Fluid kann die aufgenommene Energie anschließend beispielsweise in einen Heizkreislauf des entsprechenden Gebäudes eingespeist oder einem Wärmespeicher zugeführt werden. Ferner kann das Fluid aktiv gekühlt werden, um so Wärme aus dem Gebäudeinnenraum abzuführen, sodass das Gebäudehüllenflächenelement zugleich die Funktion einer Kühlfläche erfüllen kann.

Umgekehrt ist das erfindungsgemäße Gebäudehüllenflächenelement dazu in der Lage, Wärme an die Umgebung, insbesondere an den Gebäudeinnenraum, abzugeben, indem das Fluid aktiv beheizt und somit erwärmt zugeführt wird. Auf diese Weise kann das Gebäudehüllenflächenelement zugleich die Funktion einer Heizfläche erfüllen.

Der besondere technologische Vorteil des Gebäudehüllenflächenelements liegt insbesondere in seinem technisch einfachen und mechanisch robusten Aufbau und der unkomplizierten Funktionsweise.
Speziell die Zirkulation des Fluids in den Kanälen kann, ähnlich dem Prinzip eines Wärmetauschers, besonders einfach durch Zu- und Abströmen des Fluids über die Fluidanschlüsse bereitgestellt werden.

Ein wesentlicher Vorteil gegenüber einer Lösung, bei der ein Fluid einen Scheibenzwischenraum befüllt, besteht aufgrund der Struktur des Gebäudehüllenflächenelement mit Kapillarkanälen in der erheblich größeren Druckstabilität. Insbesondere ist es möglich, dass Fluid mit einem Druck zu beaufschlagen.

Ferner besteht gegenüber einer Lösung, bei der ein Fluid einen Scheibenzwischenraum befüllt, der wesentliche Vorteil, dass durch die Wahl der Anordnungen und Querschnitte der Kanäle die gleichmäßige Beströmung über die gesamte Fläche zuverlässig gewährleistet werden kann. Für spezielle Anwendungen ist es darüber hinaus als Vorteil möglich, bestimmte Teilflächen auszunehmen, indem dort keine Kanäle oder lediglich Kanäle geringeren Querschnitts anordnet werden.

Ein weiterer Vorteil gegenüber einer Lösung, bei der ein Fluid einen Scheibenzwischenraum befüllt besteht darin, die Kanalquerschnitte und damit das Fluidvolumen so zu begrenzen, dass nicht mehr Fluid geführt wird, als Massenstrom für die gewünschte Wärmezu- oder abfuhr benötigt wird.

Zudem weist ein erfindungsgemäßes Gebäudehüllenflächenelement den besonderen Vorteil auf, dass der Wärmestrom durch das Glas, aufgrund der Kapillarkanäle in dem jeweiligen Glaselement und des sich hieraus ergebenden, geringen Abstandes des Fluids zu den Glas-Luft-Grenzflächen des Gebäudehüllenflächenelements, positiv beeinflusst und somit ein optimaler Wärmetransport gewährleistet wird.

Ein weiterer Vorteil gegenüber einer Lösung, bei der ein Fluid einen Scheibenzwischenraum befüllt, besteht in den mechanischen sowie den Montageeigenschaften. Das Gebäudehüllenflächenelement lässt sich ähnlich einer Glasscheibe transportieren und montieren. Bevorzugt beträgt die Dicke 3 bis 10 Millimeter. Bei Verwendung geeigneter Folien als Verbindungsmittel können zumindest uniaxial längs der Kapillarkanalachsen einem Verbundsicherheitsglas angenäherte Eigenschaften ohne größeren Mehraufwand erreicht werden. Zudem kann als weiterer Vorteil eine Schraubmontage vorgesehen werden, indem Bereiche des Gebäudehüllenflächenelements keine Kanäle aufweisen, sodass hier Durchsetzungen des Gebäudehüllenflächenelements zur Aufnahme von Verschraubungen eingebracht werden können.

Die Funktionsweise des Gebäudehüllenflächenelements kann je nach gewünschter Gebäudeinnentemperatur so gewählt werden, dass durch dieses entweder ein Kühl- oder ein Heizbetrieb bereitgestellt wird und dass zudem insbesondere die anfallende solarthermische Energie optimal genutzt wird.
Im Kühlbetrieb wird beispielsweise gekühltes Fluid durch die Kanäle des Gebäudehüllenflächenelements geführt, sodass dieses als Kühlfläche wirkt. Demgegenüber wird bei einem Heizbetrieb erwärmtes Fluid durch die Kanäle des Gebäudehüllenflächenelements geführt, sodass dieses die Funktion eines Heizkörpers übernimmt.
Gleichzeitig wird die anfallende solarthermische Energie durch das Fluid aufgenommen und einem jeweils gewünschten Wärmeprozess des Gebäudes, beispielsweise einem Heizsystem oder einer Warmwasserbereitung, zugeführt.

Als weiterer Vorteil ist es beispielsweise auch möglich, das erwärmte Fluid aus einem besonnten Gebäudehüllenflächenelement einem im Schatten liegenden Gebäudehüllenflächenelement zuzuführen und das dort abgekühlte Fluid wieder dem besonnten Gebäudehüllenflächenelement zuzuführen, um eine Temperaturvergleichmäßigung ohne Energieeinsatz für Heizung oder Kühlung zu bewirken.

Ein weiterer Vorteil des Gebäudehüllenflächenelements besteht in der universellen Anpassbarkeit seines Aufbaus und seiner Geometrie an unterschiedliche Anwendungsfälle. Je nach Einsatzort und gewünschter Energieeffizienz können beispielsweise die Größe des Gebäudehüllenflächenelements oder die Anzahl der Kapillarkanäle entsprechend angepasst werden.

Darüber hinaus können durch den einfachen Aufbau sowie durch die Verwendung von Glas die Bereitstellungskosten für das erfindungsgemäße Gebäudehüllenflächenelement niedrig gehalten werden, wobei Glas als Werkstoff gleichzeitig eine lange Haltbarkeit, insbesondere durch die Vermeidung von Korrosionserscheinungen, gewährleistet.

In diesem Zusammenhang stellt es einen besonderen Vorteil dar, dass die Glaselemente mit den kapillarbildenden Vertiefungen besonders effektiv als Rollglas hergestellt und vorzugsweise nach der Verbindung mit dem anderen Glaselement auf beliebige Längen geschnitten werden kann.

Das erfindungsgemäße Gebäudehüllenflächenelement ist nicht ausschließlich auf die Verwendung zweier miteinander verbundener Glaselemente beschränkt. Vielmehr können auch weitere Glaselemente mit weiteren Kapillarkanälen übereinander angeordnet werden, wobei die Kapillarkanäle auch in mehreren Ebenen, die insbesondere hydraulisch voneinander getrennt sein können, angeordnet sein können.

Erfindungsgemäß ist der Brechungsindex des Fluids dem Brechungsindex der Glaselemente angepasst. Durch diese Anpassung wird es erreicht, dass sich das Fluid in den Kanälen optisch nicht störend von den Glaselementen abhebt und somit die Strukturen der Kanäle für einen Betrachter weitestgehend unsichtbar sind.

Auf diese Weise lassen sich ein einheitliches Erscheinungsbild des Gebäudehüllenflächenelements sowie optische Eigenschaften die denen eines konventionellen Fensters nahekommen, bereitstellen.

Als dem Brechungsindex der Glaselemente angepasst wird im Sinne dieser Wieterbildung vorzugsweise verstanden, dass der Brechungsindex des Fluids in einem Bereich von 1,46 bis 1,93 liegt.

Eine vorteilhafte Variante des Gebäudehüllenflächenelements sieht zudem vor, dass das Fluid durch ein Öl gebildet wird.

Öl als Fluid für ein erfindungsgemäßes Gebäudehüllenflächenelement weist insbesondere den Vorteil auf, dass durch dieses ein sehr großer Arbeitsbereich des Gebäudehüllenflächenelements, jedenfalls zwischen -30°C und 100°C eingestellt werden kann, ohne dass sich das Fluid verfestigt oder in die Dampfphase übergeht.

Zudem kann das Öl besonders gut an den Brechungsindex der Glaselemente angepasst werden.

Dem Fluid sind in einer weiteren vorteilhaften Variante infrarotstrahlungssensitive Partikel zugesetzt. Als infrarotstrahlungssensitiv wird die Eigenschaft verstanden, Infrarotstrahlung zu absorbieren oder zu reflektieren.

Auf diese Weise kann insbesondere bei hoher solarer Strahlungsintensität die Infraroteinstrahlung in das Gebäudeinnere durch das Gebäudehüllenflächenelement vermindert und so der Wärmeeintrag in das Gebäude zusätzlich verringert werden. Wenn dagegen solare Wärmeerträge gewünscht sind, wird das Fluid wieder ohne infrarotstrahlungssensitive Partikel oder mit geringerer Konzentration geführt.

Durch Steuerung der Partikeldichte kann der Betriebszustand in Abhängigkeit von Umgebungsbedingungen und Nutzervorgaben gesteuert werden.

Als infrarotstrahlungssensitive Partikel können dem Fluid beispielsweise Titanoxidpartikel zugegeben werden.

In einer anderen bevorzugten Weiterbildung des Gebäudehüllenflächenelements weist das Fluid eine Farbigkeit auf.

Durch die Farbigkeit kann zum einen eine farbige Gestaltung des Gebäudehüllenflächenelements insbesondere zur optischen Gestaltung umgesetzt werden. Zum anderen kann insbesondere bei einer übereinanderliegenden Anordnung mehrerer Glaselemente mit mehreren Kapillarkanälen, die allgemeine Transparenz des Gebäudehüllenflächenelements an den jeweiligen Anwendungsfall angepasst werden.

Ein erfindungsgemäßes Verbundfenster weist mindestens ein Gebäudehüllenflächenelement nach einem der Ansprüche 1 bis 4 auf.

Das Gebäudehüllenflächenelement bildet in diesem Fall den, einem Gebäudeinnenraum zugewandten, Abschnitt des Verbundfensters und wird vorzugsweise durch mindestens ein weiteres, herkömmliches Glaselement auf der außenliegenden Seite des Verbundfensters ergänzt.

Das weitere Glaselement verhindert in diesem Fall insbesondere einen unerwünschten Wärmeverlust des Gebäudehüllenflächenelements nach außen.

Durch die Kombination mit einem Gebäudehüllenflächenelement verbindet das erfindungsgemäße Verbundfenster auf besonders vorteilhafte Art und Weise die gewünschte Belichtungsfunktion für das Gebäudeinnere mit einer aktiven Nutzung anfallender solarthermischer Energie sowie mit der Möglichkeit zur Kühlung oder Erwärmung des Gebäudeinneren.

Zudem kann ein erfindungsgemäßes Verbundfenster besonders einfach auf unterschiedliche Anwendungsfälle angepasst werden und auf diese Weise mit geringstmöglichem Aufwand in ein Gebäude integriert werden. Somit können auch bereits bestehende Gebäude, beispielsweise im Rahmen einer Gebäudesanierung unter Berücksichtigung bestehender Energieeffizienzvorgaben, mit erfindungsgemäßen Verbundfenstern ausgestattet werden.

In einer vorteilhaften Weiterbildung weist das Verbundfenster mindestens ein weiteres Gebäudehüllenflächenelement nach einem der Ansprüche 1 bis 4 auf.

So kann beispielsweise ein an der Außenseite angeordnetes Gebäudehüllenflächenelement eintreffende Wärmestrahlung absorbieren und ableiten, während das auf der Innenseite angeordnete Gebäudehüllenflächenelement den Gebäudeinnenraum aktiv kühlt. In dem Zwischenraum zwischen zwei Gebäudehüllenflächenelementen oder zwischen einem Gebäudehüllenflächenelement und einer konventionellen Scheibe kann ein entsprechendes Gas oder ein Vakuum vorhanden sein.

Ein erfindungsgemäßes Gebäudefassadensystem weist ein beschriebenes Gebäudehüllenflächenelement auf. Dabei werden vorzugsweise mehrere Gebäudehüllenflächenelemente in dem Gebäudefassadensystem angeordnet.

Die Anordnung insbesondere mehrerer erfindungsgemäßer Gebäudehüllenflächenelemente innerhalb des Gebäudefassadensystems bietet den technologischen Vorteil, dass vor allem eine vergleichsweise große Fläche zur Nutzung der solarthermischen Energie bereitstellbar ist und so die Energieeffizienz eines Gebäudes deutlich verbessert werden kann.

Zudem besteht der Vorteil, dass das Gebäudehüllenflächenelement ohne größeren Zusatzaufwand zugleich die schützende Funktion der Fassade gegen Witterungseinwirkungen erfüllt.

Die Erfindung wird als Ausführungsbeispiel anhand von
- Fig. 1a: Rückansicht Gebäudehüllenflächenelement mit rückseitigen Fluidanschlüssen
- Fig. 1b: Rückansicht Gebäudehüllenflächenelement mit seitlichen Fluidanschlüssen
- Fig. 2a: geschnittene Draufsicht Gebäudehüllenflächenelement mit einseitigen Kapillarkanälen
- Fig. 2b: geschnittene Draufsicht Gebäudehüllenflächenelement mit beidseitigen Kapillarkanälen
- Fig. 3 a: geschnittene Seitenansicht mit einem Abschlusselement in einer ersten Ausführung

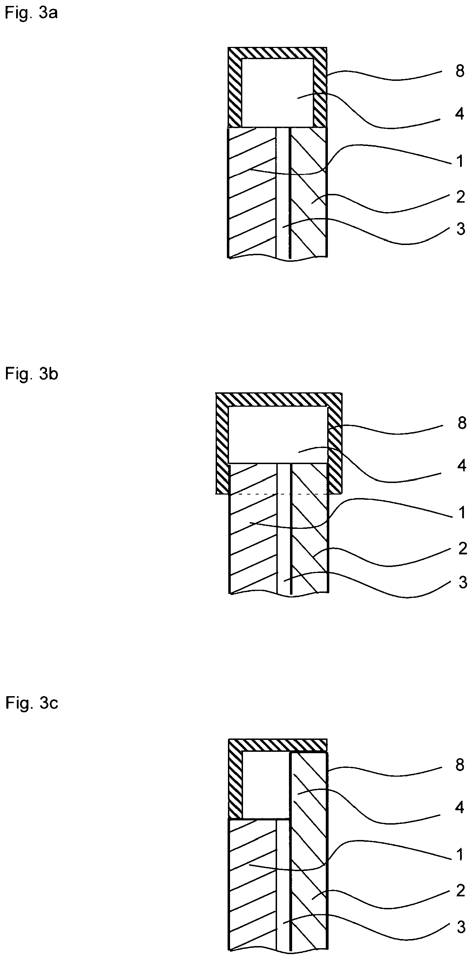

- Fig. 3 b: geschnittene Seitenansicht mit einem Abschlusselement in einer zweiten Ausführung
- Fig. 3 c: geschnittene Seitenansicht mit einem Abschlusselement in einer dritten Ausführung
näher erläutert.

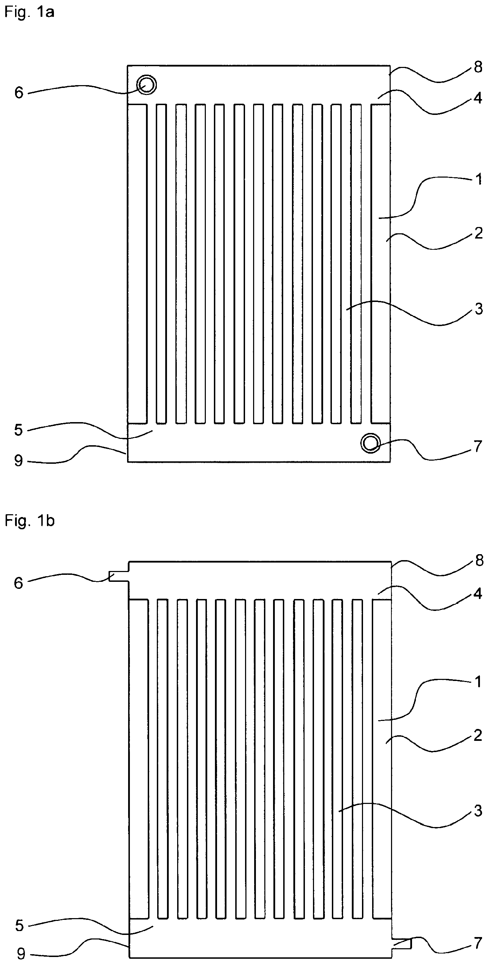

Die Figuren 1a und 1b zeigen ein erfindungsgemäßes Gebäudehüllenflächenelement in einer Rückansicht.
Das Gebäudehüllenflächenelement weist ein erstes Glaselement 1 sowie ein zweites Glaselement 2 auf, welche flächig, vorliegend mittels Vernetzung ihrer Oberflächen, miteinander verbunden sind.

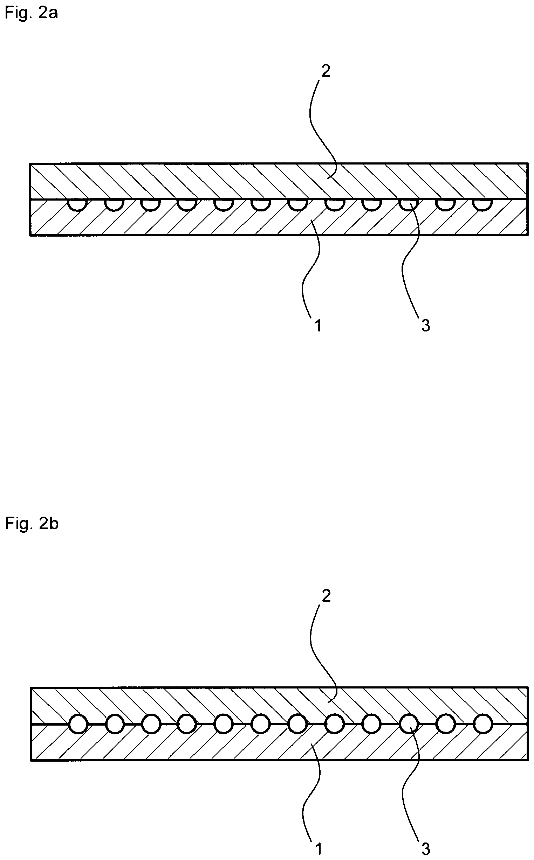

Im vorliegenden Ausführungsbeispiel gemäß Fig. 1a, 1b und 2a weist das Gebäudehüllenflächenelement Kapillarkanäle 3 auf, welche durch sich längserstreckende Vertiefungen in dem ersten Glaselement 1 gebildet werden. Die Vertiefungen werden beispielsweise durch Walzen oder Prägen in das erste Glaselement 1 eingebracht.
Die Glaselemente 1 und 2 sind erfindungsgemäß derart miteinander verbunden, dass die Vertiefungen in dem ersten Glaselement 1 durch das zweite Glaselement 2 verdeckt werden, die Verbindungsflächen die Vertriefungen gegeneinder abdichten und sich so die Kapillarkanäle 3 ausbilden.

Zudem weist das Gebäudehüllenflächenelement vorliegend einen ersten Sammelkanal 4 und einen zweiten Sammelkanal 5 auf, wobei der erste Sammelkanal 4 durch ein erstes Abschlusselement 8 und der zweite Sammelkanal 5 durch ein zweites Abschlusselement gebildet werden.
Die Abschlusselemente 8, 9 sind so mit den verbundenen Glaselementen 1, 2 verbunden, dass von diesen gebildeten Sammelkanäle 4, 5 mit den, die Kapillarkanäle 3 bildenden, sich längserstreckenden Vertiefungen verbunden sind und zudem die sich längserstreckenden Vertiefungen hydraulisch miteinander verbinden. Zur besseren Veranschaulichung der fluidischen Verbindung sind in den Fig. 1a und 1b die Übergänge zwischen den Kapillarkanälen 3 und den Sammelkanälen 4 und 5 ohne unterbrechende Linie gezeichnet.
Die Kapillarkanäle 3 und die Sammelkanäle 4, 5 sind erfindungsgemäß von einem Fluid durchströmbar. Zum Einbringen des Fluids in das beziehungsweise Ausbringen des Fluids aus dem Gebäudehüllenflächenelement, sind dem ersten Sammelkanal 4 ein erster Fluidanschluss 6 und dem zweiten Sammelkanal 5 ein zweiter Fluidanschluss 7 zugeordnet.
Wie in Fig. 1a dargestellt können die Fluidanschlüsse 6, 7 beispielsweise rückseitig im Bereich der Sammelkanäle 4, 5 angeordnet sein. Alternativ können die Fluidanschlüsse 6, 7, wie in Fig. 1b dargestellt, seitlich im Bereich der Sammelkanäle 4, 5 angeordnet sein. Die Durchströmung der Kanäle 3, 4, 5 erfolgt, wie in den Fig. 1a und 1b dargestellt, beispielsweise nach dem Tichelmann-Prinzip, wobei ein Sammelkanal 4 oder 5 einen Vorlauf und der jeweils andere Sammelkanal 4 oder 5 einen Rücklauf bilden.

Das erfindungsgemäße Gebäudehüllenflächenelement ist vorliegend zum einen dazu in der Lage, Umgebungswärme aufzunehmen und diese über das in den Kanälen 3, 4, 5 zirkulierende Fluid einem angeschlossenen Heiz- oder Wärmespeicherkreislauf (nicht dargestellt) zuzuführen.

Die Umgebungswärme kann hierbei sowohl durch, insbesondere solare, Wärmestrahlung als auch durch eine Gebäudeinnen- oder außentemperatur gegeben sein.
Bei einer solchen Funktionsweise kann das Gebäudehüllenflächenelement beispielsweise eine effiziente Nutzung der solarthermischen Energie oder alternativ eine Kühlung des Gebäudeinnern bereitstellen.
Bei einem Kühlbetrieb wird in diesem Zusammenhang abgekühltes Fluid durch die Kanäle 3, 4, 5 geführt, welches dabei die Umgebungswärme aus dem Gebäudeinneren aufnimmt.

Alternativ kann das Gebäudehüllenflächenelement in einem Heizbetrieb betrieben werden, wobei erwärmtes Fluid durch die Kanäle 3, 4, 5 zirkuliert und hierbei seine Wärme an das Gebäudeinnere abgibt oder zumindest eine Wärmeübertragung aus dem Gebäudeinnenbereich auf das Gebäudehüllenflächenelement vermieden oder reduziert wird.

Die Fig. 2a und 2b zeigen jeweils eine Ausführungsform des Gebäudehüllenflächenelements in einer geschnittenen Draufsicht.

Die Fig. 2a zeigt hierbei eine Ausführungsform, bei welcher die Kapillarkanäle 3 nur einseitig durch entsprechende, sich längserstreckende Vertiefungen des ersten Glaselements 1 gebildet werden.
Demgegenüber zeigt Fig. 2b eine Ausführungsform, bei welcher die Kapillarkanäle 3 doppelseitig durch jeweils gegenüberliegende, sich längserstreckende Vertiefungen gebildet werden.

Die geometrische Ausführung der Kapillarkanäle 3 ist nicht ausschließlich auf die in den Fig. 2a und 2b dargestellte, halbrunde Form beschränkt. Vielmehr können die Kapillarkanäle 3 in anderen Ausführungsbeispielen auch andere, beispielsweise eckige Querschnitte aufweisen.

Die Fig. 3a, 3b und 3c zeigen unterschiedliche Ausführungsformen der Abschlusselemente am Beispiel des ersten Abschlusselements. In dem Ausführungsbeispiel nach Fig. 3a wird das Abschlusselement stumpf aufgestoßen, wobei die äußeren Planebenen der Glaselemente fortgeführt werden. In dem Ausführungsbeispiel nach Fig. 3b übergreift das Abschlusselement die Glaselemente. Fig. 3c zeigt ein Ausführungsbeispiel mit einem im Schnitt winkelförmig ausgebildeten Abschlusselement. An den Berührungsflächen zwischen dem Abschlusselement und den Glaselementen erfolgt eine dichtende Verbindung.

### Verwendete Bezugszeichen

- 1: erstes Glaselement
- 2: zweites Glaselement
- 3: Kapillarkanäle
- 4: erster Sammelkanal
- 5: zweiter Sammelkanal
- 6: erster Fluidanschluss
- 7: zweiter Fluidanschluss
- 8: erstes Abschlusselment
- 9: zweites Abschlusselement

## Patentansprüche

1. Gebäudehüllenflächenelement,
aufweisend ein erstes Glaselement (1) und ein zweites Glaselement (2), wobei beide Glaselemente (1, 2) durchsichtig und flächig ausgebildet sind, wobei mindestens ein Glaselement (1, 2) eine Mehrzahl längserstreckender Vertiefungen aufweist, und wobei die Glaselemente (1, 2) flächig derart miteinander verbunden sind, dass die längserstreckenden Vertiefungen des einen Glaselements (1) durch das andere Glaselement (2) abgedeckt werden, und wobei die längserstreckenden Vertiefungen Kapillarkanäle (3) ausbilden, welche von einer ersten Stirnseite der verbundenen Glaselemente (1, 2) zu einer zweiten Stirnseite der verbundenen Glaselemente (1, 2) führen und
aufweisend ein erstes und ein zweites Abschlusselement (8, 9), wobei das erste Abschlusselement (8) an der ersten Stirnseite der verbundenen Glaselemente (1, 2) und das zweite Abschlusselement (9) an der zweiten Stirnseite der verbundenen Glaselemente (1, 2) angeordnet ist und wobei das erste Abschlusselement (8) einen ersten Sammelkanal (4) und das zweite Abschlusselement (8) einen zweiten Sammelkanal (5) ausbilden, wobei der erste Sammelkanal (4) und der zweite Sammelkanal (5) mit den Kapillarkanälen (3) an deren gegenüberliegenden Enden verbunden sind, und wobei die Kanäle (3, 4, 5) von einem Fluid durchströmbar sind, und wobei dem ersten Sammelkanal (4) ein erster Fluidanschluss (6) und dem zweiten Sammelkanal (5) ein zweiter Fluidanschluss (7) zugeordnet sind und wobei der Brechungsindex des Fluids dem Brechungsindex der Glaselemente (1, 2) angepasst ist, so dass sich das Fluid in den Kanälen (3, 4, 5) optisch nicht störend von den Glaselementen (1, 2) abhebt und die Strukturen der Kanäle (3, 4, 5) für einen Betrachter weitestgehend unsichtbar sind.

2. Gebäudehüllenflächenelement nach Anspruch 1,
wobei das Fluid durch ein Öl gebildet wird.

3. Gebäudehüllenflächenelement nach einem der vorhergehenden Ansprüche,
wobei dem Fluid infrarotstrahlungssensitive Partikel zugesetzt sind.

4. Gebäudehüllenflächenelement nach einem der vorhergehenden Ansprüche,
wobei das Fluid eine Farbigkeit aufweist.

5. Verbundfenster,
aufweisend mindestens ein Gebäudehüllenflächenelement nach einem der Ansprüche 1 bis 4, wobei das Gebäudehüllenflächenelement den, einem Gebäudeinnenraum zugewandten, Abschnitt des Verbundfensters bildet.

6. Gebäudefassadensystem,
aufweisend mindestens ein Gebäudehüllenflächenelement nach einem der Ansprüche 1 bis 4.

## Claims

1. A building envelope surface element,
comprising a first glass element (1) and a second glass element (2), wherein both glass elements (1, 2) are transparent and planar, wherein at least one glass element (1, 2) has a plurality of longitudinally extending recesses, and wherein the glass elements (1, 2) are connected to each other in a planar manner such that the longitudinally extending recesses of one glass element (1) are covered by the other glass element (2), and wherein the longitudinally extending recesses form capillary channels (3) which lead from a first front side of the connected glass elements (1, 2) to a second front side of the connected glass elements (1, 2), and
comprising a first and a second end element (8, 9), wherein the first end element (8) is arranged on the first front side of the connected glass elements (1, 2) and the second end element (9) is arranged on the second front side of the connected glass elements (1, 2), and wherein the first end element (8) forms a first collecting channel (4) and the second end element (8) forms a second collecting channel (5), wherein the first collecting channel (4) and the second collecting channel (5) are connected to the capillary channels (3) at the opposite ends of them, and wherein a fluid can flow through the channels (3, 4, 5), and wherein a first fluid connection (6) is assigned to the first collecting channel (4) and a second fluid connection (7) is assigned to the second collecting channel (5), and wherein the refraction index of the fluid is adapted to the refraction index of the glass elements (1, 2) so that the fluid in the channels (3, 4, 5) does not set itself apart from the glass elements (1, 2) in an optically disturbing manner and the structures of the channels (3, 4, 5) are largely invisible to the observer.

2. The building envelope surface element according to claim 1,
wherein the fluid is an oil.

3. The building envelope surface element according to one of the previous claims,
wherein particles sensitive to infrared radiation are added to the fluid.

4. The building envelope surface element according to one of the previous claims,
wherein the fluid is coloured.

5. A coupled window,
comprising at least one building envelope surface element according to one of the previous claims 1 to 4,
wherein the building envelope surface element forms a coupled window section which faces a building interior space.

6. A building facade system,
comprising at least one building envelope surface element according to one of the claims 1 to 4.

## Revendications

1. Élément de surface d'enveloppe de bâtiment
présentant un premier élément en verre (1) et un deuxième élément en verre (2),
les deux éléments en verre (1, 2) étant transparents et sous forme plane, au moins un élément en verre (1, 2) comportant une pluralité de creux longitudinaux, et les éléments en verre (1, 2) étant reliés en surface les uns aux autres de telle sorte que les creux de l'un des éléments en verre (1) soient recouverts par l'autre élément en verre (2), et les creux, qui s'étendent longitudinalement, forment des canaux capillaires (3) qui s'étendent d'un premier côté frontal des éléments en verre reliés (1, 2) à un second côté frontal des éléments en verre reliés (1, 2), et présentant un premier et un deuxième élément de finition (8, 9), le premier élément de finition (8) étant disposé sur le premier côté frontal des éléments en verre reliés (1, 2) et le second élément de finition (9) étant disposé sur le second côté frontal des éléments en verre reliés (1, 2), et le premier élément de finition (8) formant un premier canal de collecte (4) et le second élément de finition (8) formant un second canal de collecte (5), le premier canal de collecte (4) et le second canal de collecte (5) étant reliés aux canaux capillaires (3) au niveau de leurs extrémités opposées (3), et les canaux (3, 4, 5) pouvant être traversés par un fluide, et le premier canal de collecte (4) étant associé à un premier raccord de fluide (6) et le second canal de collecte (5) étant associé à un second raccord de fluide (7),
et l'indice de réfraction du fluide étant adapté à l'indice de réfraction des éléments en verre (1, 2) de sorte que l'apparence du fluide dans les canaux (3, 4, 5) ne se distingue pas de façon perturbante des éléments en verre (1, 2) et que les structures des canaux (3, 4, 5) soient aussi invisibles que possible pour l'observateur.

2. Élément de surface d'enveloppe de bâtiment suivant la revendication 1, le fluide étant formé par une huile.

3. Élément de surface d'enveloppe de bâtiment suivant une des revendications précédentes,
des particules sensibles aux rayons infrarouges étant ajoutées au fluide.

4. Élément de surface d'enveloppe de bâtiment suivant une des revendications précédentes,
le fluide présentant des couleurs.

5. Fenêtre à double vitrage
comportant au moins un élément de surface d'enveloppe de bâtiment suivant une des revendications précédentes 1 à 4,
l'élément de surface d'enveloppe de bâtiment formant la section de la fenêtre à double vitrage qui fait face à un espace intérieur de bâtiment.

6. Système de façade de bâtiment
comportant au moins un élément de surface d'enveloppe de bâtiment suivant une des revendications précédentes 1 à 4.
